# EUROPEAN PATENT APPLICATION

(11) **EP 4 174 734 A1**
(43) Date of publication of application: **03.05.2023**
(21) Application number: 20942406.8
(22) Date of filing: 26.06.2020
(51) Int. Cl.: G06N 20/00

(54) **TRAINING DATA GENERATION PROGRAM, DEVICE, AND METHOD**

(71) Applicant: FUJITSU LIMITED, Kawasaki-shi, Kanagawa 211-8588 (JP)
(72) Inventor: NAKAO, Yuri, Kawasaki-shi, Kanagawa 211-8588 (JP)
(74) Representative: Hoffmann Eitle
(86) International application number: PCT/JP2020/025360
(87) International publication number: WO 2021/260945

(57) **Abstract**

Training data for machine learning of a model, which appropriately reduces a bias toward discriminatory determination based on a discriminatory attribute in consideration of context, is generated by receiving a discrimination level representing a degree of discriminatory contribution of an attribute to a determination result with respect to a contribution level representing a correlation between the attribute and the determination result calculated on the basis of the number of data for each attribute contained in a plurality of data, determining a reference value for the contribution level of each attribute on the basis of the received discrimination level and the contribution level, and changing the attribute of at least partial data of the plurality of data such that the contribution level of each attribute becomes equal to or lower than the reference value.

## Description

### TECHNICAL FIELD

The disclosed technique relates to a training data generation program, a training data generation device, and a method of generating training data.

### BACKGROUND ART

For example, a machine-learned model may be used to determine whether or not a loan application is accepted, whether or not an employment test is passed, or the like. A model used for such determination needs to be generated by fairness-aware machine learning or the like so that no discrimination occurs in a determination result based on sensitive attributes such as gender and race. Furthermore, in addition to attributes stipulated not to be treated in a legally discriminatory manner at a time of determination (hereinafter referred to as direct discriminatory attributes) such as gender, race, and the like, a discriminatory result may be promoted when attributes such as an address, an occupation, and the like, which do not seem to be discriminatory apparently, match the tendency of the direct discriminatory attribute. Hereinafter, such attributes that cause a discriminatory determination result while they do not seem to be discriminatory apparently will be referred to as indirect discriminatory attributes. Furthermore, the direct discriminatory attributes and the indirect discriminatory attributes will be collectively referred to as "discriminatory attributes".

Conventionally, there has been proposed a technique of detecting the discriminatory attributes using a value called extended lift (elift) calculated using the number of data for each attribute as an index representing a correlation between attributes contained in data and determination results. According to this technique, an attribute with an attribute value whose elift is equal to or higher than a threshold value is determined that the attribute effectively acts on a result, and is detected as a discriminatory attribute.

Furthermore, there is a technique of correcting a label of training data for machine learning of a model in such a manner that attribute values of discriminatory attributes do not produce discriminatory determination results.

### SUMMARY

### TECHNICAL PROBLEM

In a case of applying determination using a model generated by the fairness-aware machine learning to a business or the like that needs fairness, what is regarded as a discriminatory attribute depends on context such as culture, laws and regulations, business domains, business practice, and the like. However, in a case of setting a uniform threshold value for each attribute included in data as in an existing technique, there is a problem that erroneous detection or detection omission of a discriminatory attribute may occur. In this case, it is not possible to correct the label of the training data to appropriately reduce a bias toward discriminatory determination. Accordingly, there is a problem that a model obtained by machine learning using such training data may not output an appropriate determination result in consideration of fairness.

In one aspect, the disclosed technique aims to generate training data for carrying out machine learning of a model in which a bias toward discriminatory determination based on a discriminatory attribute in consideration of context is appropriately reduced.

### SOLUTION TO PROBLEM

In one aspect, the disclosed technique accepts an evaluation value for a value calculated on the basis of the number of data for each attribute contained in a plurality of data, and determines a reference value for each attribute on the basis of the accepted evaluation value and the number of data for each attribute. Furthermore, the disclosed technique generates training data for machine learning by changing the attribute of at least partial data of the plurality of data according to the reference value for each attribute.

### ADVANTAGEOUS EFFECTS OF INVENTION

In one aspect, it exerts an effect that training data for carrying out machine learning of a model in which a bias toward discriminatory determination based on a discriminatory attribute in consideration of context is appropriately reduced may be generated.

### BRIEF DESCRIPTION OF DRAWINGS

FIG. 1 is a functional block diagram of a training data generation device.
FIG. 2 is a diagram for explaining a case of setting a certain reference value.
FIG. 3 is a diagram for explaining a case of determining a reference value for a contribution level of each attribute.
FIG. 4 is a diagram illustrating an exemplary reception screen.
FIG. 5 is a diagram for explaining setting of an agreed discrimination level.
FIG. 6 is a diagram for explaining the setting of the agreed discrimination level.
FIG. 7 is a diagram for explaining various discrimination level modes.
FIG. 8 is a diagram illustrating an example of the agreed discrimination level set for each attribute.
FIG. 9 is a diagram illustrating an exemplary selection screen.
FIG. 10 is a diagram illustrating an exemplary additional reception screen.
FIG. 11 is a diagram illustrating exemplary aggregate results of discrimination levels selected by second evaluators.
FIG. 12 is a diagram for explaining determination of the reference value for the contribution level of each attribute according to a final discrimination level.
FIG. 13 is a diagram illustrating an example of the reference value for the contribution level of each attribute.
FIG. 14 is a diagram for explaining a change of data based on the reference value for the contribution level.
FIG. 15 is a block diagram illustrating a schematic configuration of a computer that functions as the training data generation device.
FIG. 16 is a flowchart illustrating an exemplary training data generation process.

### DESCRIPTION OF EMBODIMENTS

Hereinafter, an exemplary embodiment according to the disclosed technique will be described with reference to the drawings.

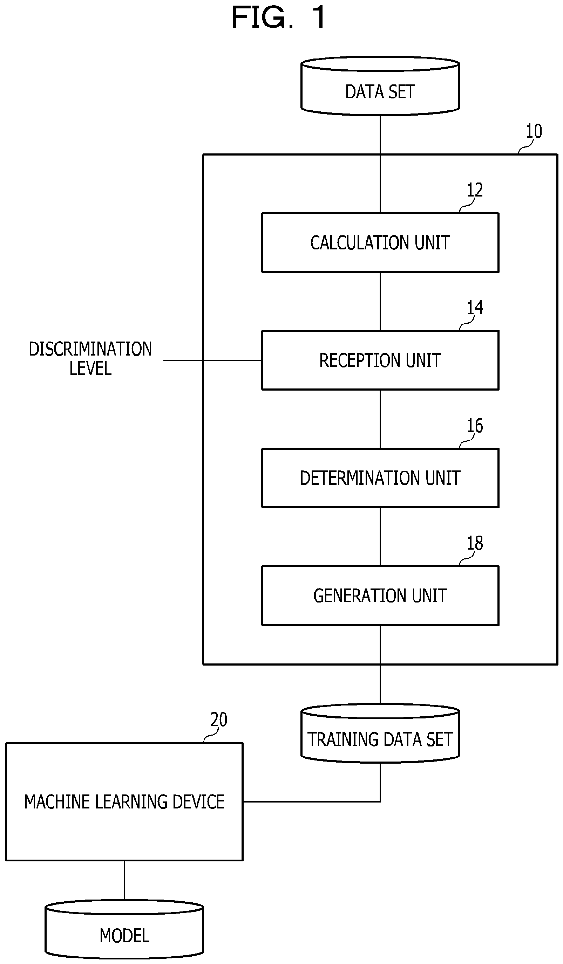

As illustrated in FIG. 1, a data set is input to a training data generation device 10 according to the present embodiment. Each piece of data included in the data set is source data for training data for generating a model by fairness-aware machine learning, and includes an attribute value for each of a plurality of attributes. For example, when a model to be generated is a model for determining approval or rejection of a loan examination, attributes include gender, race, income, an occupation, a purpose of the loan (hereinafter simply referred to as "purpose"), a payback period, an address, age, a determination result, and the like of each user. The attribute value is a value corresponding to a type of an attribute, and for example, it is a value indicating "male" or "female" for the attribute "gender", and is a value indicating "approval" or "rejection" for the attribute "determination result". Each piece of data may be a vector value that joins the attribute values of the individual attributes.

The attribute "determination result" is an exemplary "attribute that represents the determination result" according to the disclosed technique. Hereinafter, the attribute "determination result" will also be referred to as a "label". Furthermore, attributes other than the attribute "determination result" is exemplary "attributes used for determination" according to the disclosed technique. The training data generation device 10 specifies an indirect discriminatory attribute from attributes other than a direct discriminatory attribute and the attribute "determination result" among the attributes contained in the data. For example, in a case where gender and race are defined as direct discriminatory attributes in the example of the loan examination described above, the training data generation device 10 specifies the indirect discriminatory attribute from the income, occupation, loan purpose, payback period, address, and age.

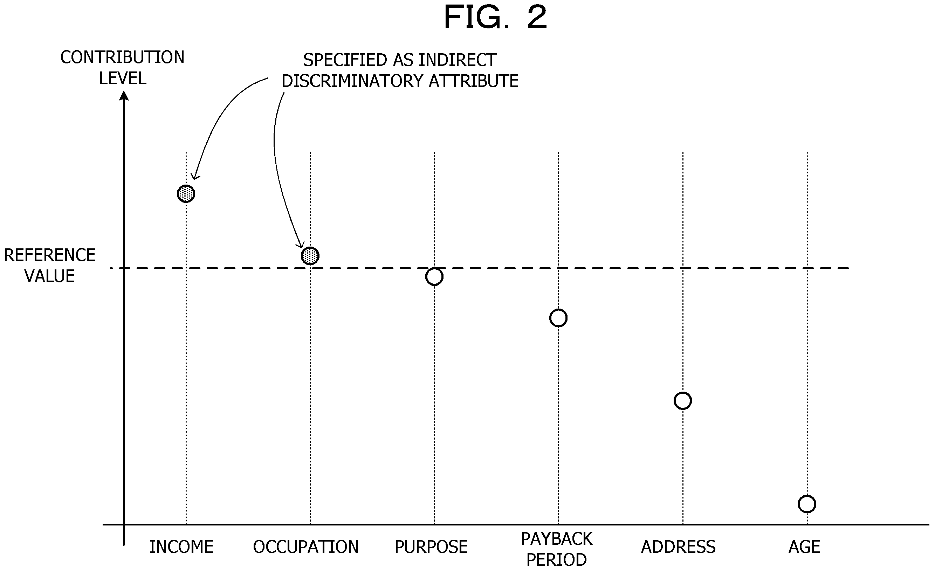

Here, as illustrated in FIG. 2, it is conceivable that a computer calculates a contribution level of each attribute to the determination result of the attribute, and specifies the attribute whose calculated contribution level exceeds a predetermined reference value as the indirect discriminatory attribute. The contribution level is a value representing a correlation between the attribute and the determination result, which is calculated on the basis of the number of data of each attribute, such as elift in the existing technique.

However, as described above, in a case of applying determination using a model generated by the fairness-aware machine learning to a business or the like that needs fairness, what is regarded as a discriminatory attribute depends on context. A "contribution effect" for each attribute needs to be considered for the computer to specify the indirect discriminatory attribute in consideration of context dependence. The contribution effect is an effect that, for humans, the reference value for the contribution level to be the basis for the indirect discriminatory attribute determination is observed to differ for each attribute. For example, some attributes are considered to be discriminatory when they contribute to the determination result even if only slightly, and some attributes are considered to be discriminatory only when they significantly contribute to the determination result. As illustrated in FIG.2, the specification in consideration of the contribution effect for each attribute may not be made in a case where the computer determines a uniform reference value for any attribute and specifies the indirect discriminatory attribute by whether or not the contribution level exceeds the determined reference value.

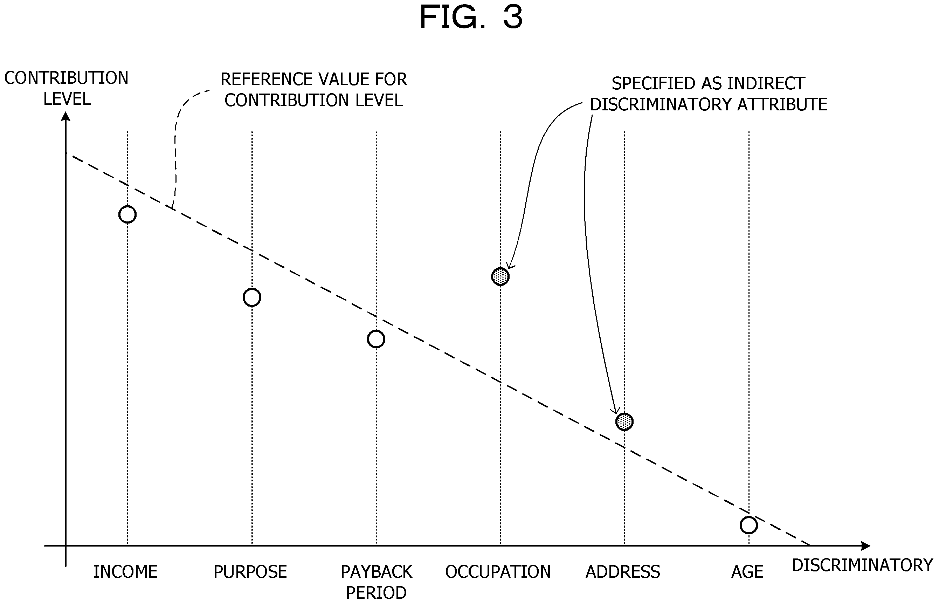

In the present embodiment, as illustrated in FIG. 3, the training data generation device 10 determines the reference value for the contribution level for each attribute. Specifically, the training data generation device 10 determines the reference value for the contribution level of each attribute according to how discriminatory the attribute is with respect to the contribution level of each attribute. Hereinafter, a functional configuration of the training data generation device 10 according to the present embodiment will be described in detail.

As illustrated in FIG. 1, the training data generation device 10 functionally includes a calculation unit 12, a reception unit 14, a determination unit 16, and a generation unit 18.

The calculation unit 12 calculates a contribution level of each attribute from the data set input to the training data generation device 10. As described above, the contribution level is a value calculated on the basis of the number of data for each attribute, and is a value representing the correlation between the attribute and the determination result. For example, the calculation unit 12 may calculate the contribution level using a reliability level conf (X -> Y) represented by a ratio of, to data having an attribute value X for a certain attribute, data also having an attribute value Y for another attribute, the existing technique elift, or the like. Note that the contribution level is an exemplary "value calculated on the basis of the number of data for each attribute contained in a plurality of data" according to the disclosed technique.

As an example, it is assumed that "purchase of a used car" and a "vacation budget" are attribute values of the attribute "purpose". In this case, the calculation unit 12 calculates, as a reliability level regarding the "purchase of a used car", a ratio of the number of data having the attribute value "approval" for the attribute "determination result" and the attribute value "purchase of a used car" for the attribute "purpose" to the number of data having the attribute value "approval" for the attribute "determination result". Furthermore, the calculation unit 12 calculates a reliability level regarding the "vacation budget" in a similar manner. Then, the calculation unit 12 calculates a ratio or a difference between the reliability level of the "purpose of a used car" and the reliability level of the "vacation budget" as a contribution level to the determination result for the attribute "purpose". This indicates that, when the ratio or the difference between the reliability levels of the individual attribute values is large for a certain attribute, the determination result based on the attribute value of that attribute is largely biased.

Furthermore, elift is represented by an equation "elift = conf(X, Z → Y)/conf(X → Y)". As an example, the calculation unit 12 sets X as an attribute value "New York" for the attribute "address", Z as an attribute value "African-American" for the attribute "race", and Y as an attribute value "rejection" for the attribute "determination result", and calculates elift from the equation above using the corresponding number of data. This elift indicates a ratio of a "percentage of African-American people living in New York who have rejected in a loan examination" to a "percentage of people living in New York who have rejected in a loan examination". Furthermore, the calculation unit 12 calculates elift in a similar manner by setting X as an attribute value "Los Angeles" for the attribute "address" and Y and Z to be similar to the above. The calculation unit 12 calculates a ratio or a difference between those two elifts as a contribution level of the attribute "address". The contribution level in this case is an index for determining whether or not the attribute "address" serves as an indirect discriminatory attribute on the basis of the correlation with the direct discriminatory attribute "race".

Note that, in a case where there are three or more attribute values that may be taken by the attribute, a ratio or a difference between the maximum value and the minimum value of the reliability level or elift calculated for each attribute value may be calculated as a contribution level. Furthermore, a method of calculating the contribution level is not limited to the example described above, and it is sufficient if the method calculates the correlation between the attribute and the determination result on the basis of the number of data for each attribute.

The reception unit 14 receives an evaluation value for the contribution level of each attribute calculated by the calculation unit 12. The reception unit 14 receives, as the evaluation value, a discrimination level determined on the basis of the contribution level of each attribute used for determination, which represents a degree of discriminatory contribution of the attribute used for the determination to the determination result. In other words, the discrimination level may be regarded as a rate at which the contribution level is lowered so that each attribute becomes non-discriminatory.

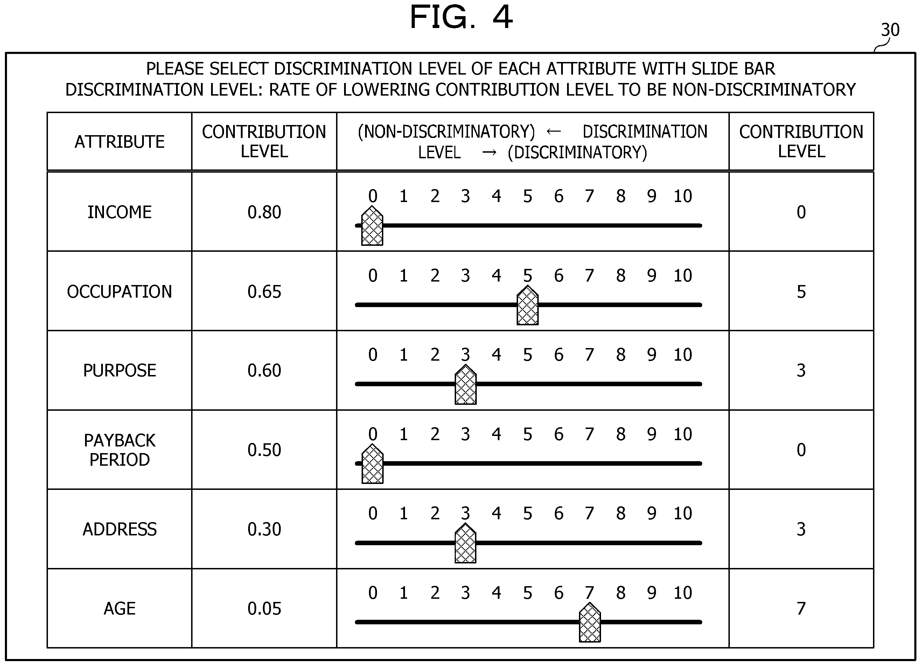

Specifically, the reception unit 14 displays, for example, a reception screen 30 as illustrated in FIG. 4 on a display device of an information processing apparatus used by each of a plurality of first evaluators included in a first evaluator group, and receives the discrimination level for each attribute from each of the plurality of first evaluators. In the example of FIG. 4, the reception screen 30 displays the contribution levels associated with the respective attributes, slide bars for selecting the discrimination levels for the respective attributes, and the discrimination levels selected by the slide bars. While the discrimination levels are set as discrete values of 0, 1, 2,..., and 10 in the example of FIG. 4, the discrimination level is not limited to this example.

Here, an easily conceivable method of determining the discrimination level is to display each attribute in random order to each of all the evaluators and aggregate the discrimination level received from each of all the evaluators. However, while the evaluators enter into a deliberation process at a time of evaluating a discrimination level of an attribute that is difficult to evaluate, this "deliberation process" is not considered according to this method. In the deliberation process, the evaluators consider every conceivable scenario for one attribute to select a discrimination level. For example, the evaluators consider multiple scenarios such as considering the attribute "address" is not normally discriminatory but may be treated as being discriminatory if people of a particular race live in a particular region, and the like. There is a significant cognitive cost when entered into the deliberation process. As a cognitive characteristic of humans, the evaluators tend to make easier evaluations when continuing to make decisions with high cognitive costs. In other words, the evaluators may easily evaluate the attribute entered into the deliberation process as being non-discriminatory. Therefore, according to this method, the reliability of the evaluation given to each attribute may not be ensured. In view of the above, the training data generation device 10 according to the present embodiment reduces the cognitive load when the evaluators evaluate the discrimination level, and assists in such a manner that the evaluators are enabled to evaluate whether an attribute that is difficult to evaluate is discriminatory or non-discriminatory quickly and appropriately.

Specifically, the reception unit 14 determines whether or not there is a consensus on the discrimination level for a certain attribute by the first evaluator group. An attribute with a consensus about the discrimination level in the first evaluator group has a common tendency of discrimination level evaluation from each of the first evaluators. In other words, the discrimination level evaluation concentrates. On the other hand, the discrimination level evaluations of the individual first evaluators for an attribute with no consensus in the first evaluator group are dispersed. In view of the above, the reception unit 14 determines whether or not there is a consensus in the first evaluator group on the basis of a degree of dispersion of the discrimination levels for the attribute. More specifically, in a case where the degree of dispersion of the discrimination levels received from the first evaluator group through the reception screen 30 described above is equal to or lower than a predetermined value, the reception unit 14 aggregates the discrimination levels received from each of the first evaluators, and accepts it as an agreed discrimination level in the first evaluator group.

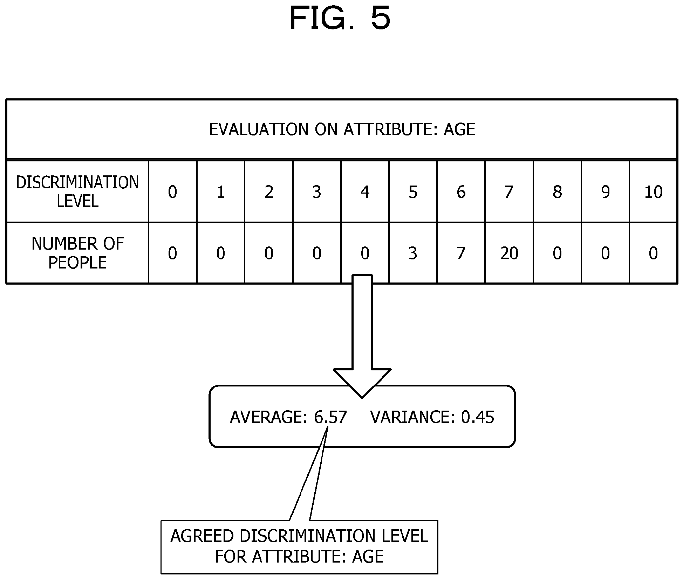

For example, the reception unit 14 calculates variance of the discrimination levels evaluated for the individual attributes as an example of the degree of dispersion of the discrimination levels. FIG. 5 illustrates an aggregate result of the discrimination levels for the attribute "age" received from the first evaluator group of 30 people. In the example of FIG. 5, the variance of the discrimination levels for the attribute "age" is calculated as 0.45. For example, when the predetermined value is set to 1, the reception unit 14 determines the attribute "age" as an attribute with a single agreed discrimination level in the first evaluator group (hereinafter referred to as "agreed attribute"), and for example, sets an average discrimination level 6.57 as the agreed discrimination level. Note that the degree of dispersion is not limited to the variance, and may be a standard deviation or the like. Furthermore, the agreed discrimination level is not limited to the average, and may be a mode value, a median value, or the like.

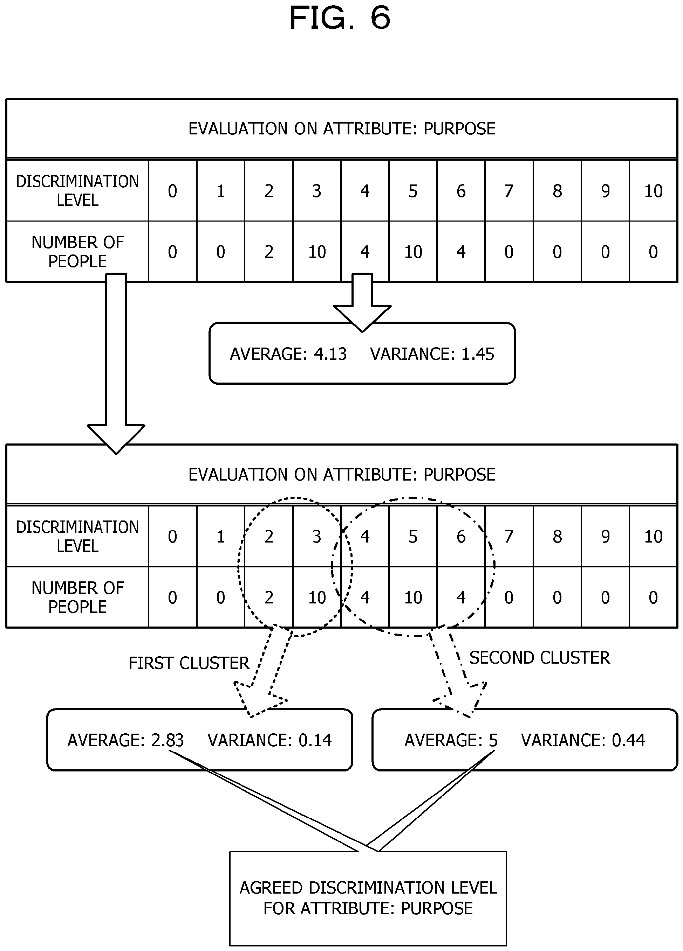

On the other hand, in a case where the degree of dispersion exceeds the predetermined value, the reception unit 14 clusters the discrimination levels received from the individual first evaluators until the degree of dispersion of them becomes equal to or lower than the predetermined value, aggregates the discrimination levels included in each cluster, and accepts it as each of the agreed discrimination levels. FIG. 6 illustrates an aggregate result of the discrimination levels for the attribute "purpose" received from the first evaluator group of 30 people. In the example of FIG. 6, the variance of the discrimination levels for the attribute "purpose" is calculated as 1.45. In a similar manner to the example described above, when the predetermined value is set to 1, the reception unit 14 determines the attribute "purpose" as an attribute with no single agreed discrimination level in the first evaluator group (hereinafter referred to as "non-consensual attribute").

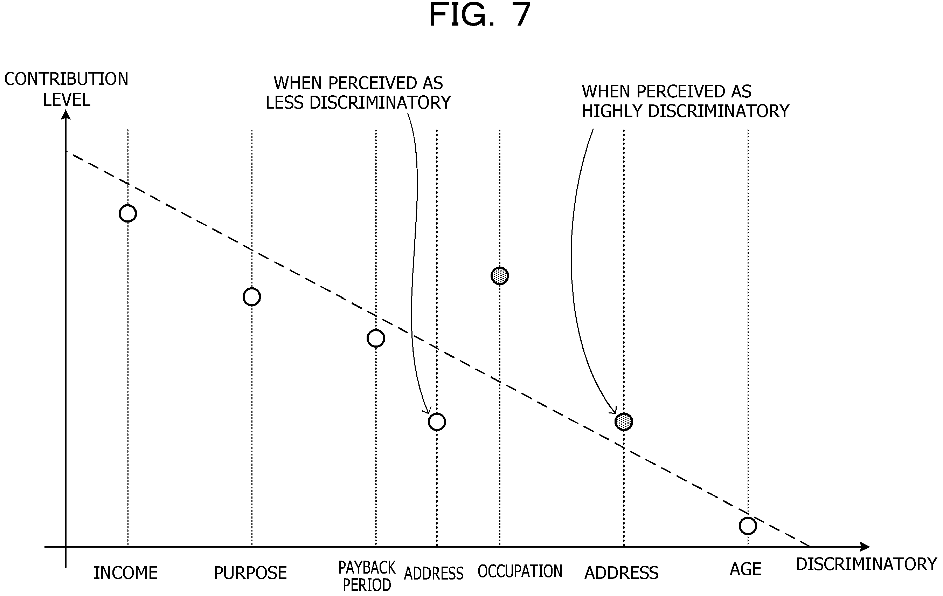

In this case, the reception unit 14 applies various discrimination level modes to the non-consensual attribute. Applying various discrimination level modes is to set multiple agreed discrimination levels for the attribute. Even in a case where there is no consensus on a single discrimination level in the first evaluator group, depending on the attribute, there may be a consensus on various discrimination levels in the first evaluator group while observations on the discrimination level do not match, rather than there is no consensus at all. For example, as illustrated in FIG. 7, in a case where there are evaluators who perceive the attribute "address" as highly discriminatory and evaluators who perceive it as less discriminatory, various discrimination level modes are applied. This is because the attribute to which various discrimination level modes are applied is highly likely to be an attribute that easily triggers a deliberation process, and various fairness criteria in the evaluator group are expressed by setting multiple agreed discrimination levels for one attribute.

For example, the reception unit 14 clusters the discrimination levels evaluated by the evaluator group in such a manner that the number of clusters becomes the number obtained by adding one to the number of clusters for which existence or nonexistence of an agreed discrimination level is determined immediately before. In the example of FIG. 6, since the number of clusters immediately before is one, the reception unit 14 sets the number of clusters to two, and clusters the discrimination levels by, for example, the k-means algorithm or the like. Then, the reception unit 14 calculates, for each cluster, variance of the discrimination levels within the cluster. In the example of FIG. 6, the variance is calculated as 0.14 for the first cluster (broken line part in FIG. 6), and is calculated as 0.44 for the second cluster (dash-dotted line part in FIG. 6). When the predetermined value is set to 1 in a similar manner to the above, the variance of any of the clusters is equal to or lower than the predetermined value, and thus the reception unit 14 sets each of the averages of the discrimination levels included in the individual clusters as an agreed discrimination level for the attribute. In the example of FIG. 6, the reception unit 14 sets two agreed discrimination levels of 2.83 and 5 for the attribute "purpose".

Then, for the attribute for which one agreed discrimination level is set, the reception unit 14 accepts that agreed discrimination level as a final discrimination level. Furthermore, for the attribute for which multiple agreed discrimination levels are set, the reception unit 14 presents, as an option, each of the agreed discrimination levels to each of second evaluators included in a second evaluator group. Then, the reception unit 14 causes each of the second evaluators to select an option, aggregates the selection results, and accepts it as a final evaluation value. This is to prompt early agreement on determination of a "final discrimination level" to be described later by the second evaluator group on the basis of various fairness criteria in the first evaluator group expressed by the various discrimination level modes described above.

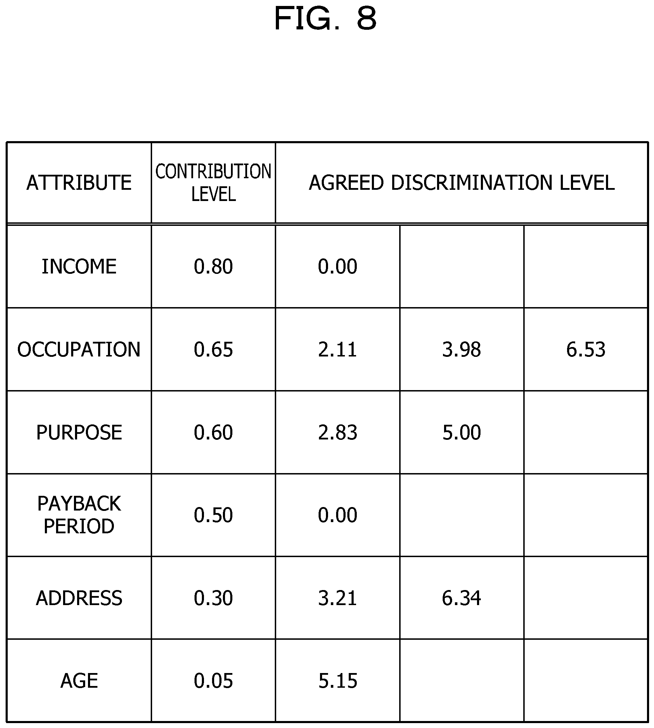

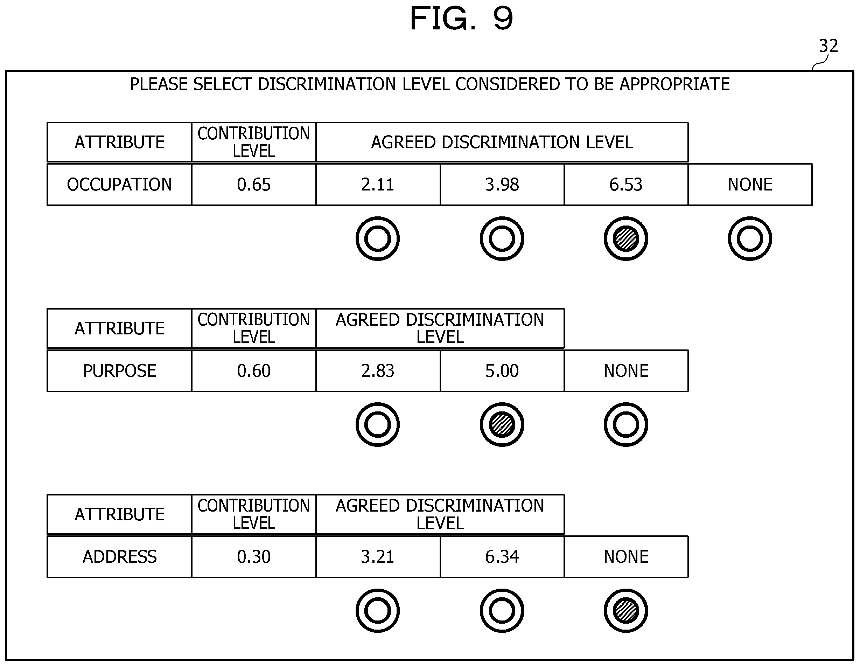

For example, as illustrated in FIG. 8, it is assumed that an agreed discrimination level is set for each attribute. In this case, since one agreed discrimination level is set for the attributes "income", "payback period", and "age", the reception unit 14 directly accepts the agreed discrimination levels as final discrimination levels. Furthermore, multiple agreed discrimination levels are set for the attributes "occupation", "purpose", and "address". Accordingly, the reception unit 14 displays, for example, a selection screen 32 as illustrated in FIG. 9 on a display device of an information processing apparatus used by each of the second evaluators. The second evaluators may be evaluators different from the first evaluators included in the first evaluator group, or at least a part of the second evaluators may be common to the first evaluators.

In the example of FIG. 9, display parts such as radio buttons for selecting one of the multiple agreed discrimination levels or not agreeing to any of the agreed discrimination levels ("none" in FIG. 9) are displayed on the selection screen 32. The second evaluator selects one of the agreed discrimination levels or "none". In this manner, among multiple attributes, an attribute for which multiple agreed discrimination levels are set, which is, an attribute on which discrimination level evaluation in the first evaluator group varies is preferentially displayed with the agreed discrimination levels for the attribute as options. As a result, the second evaluators do not need to enumerate various cases to be considered for one attribute by themselves, whereby the cognitive cost when the second evaluators evaluate an attribute that is difficult to evaluate is reduced, and early agreement on a discrimination level of each attribute may be prompted.

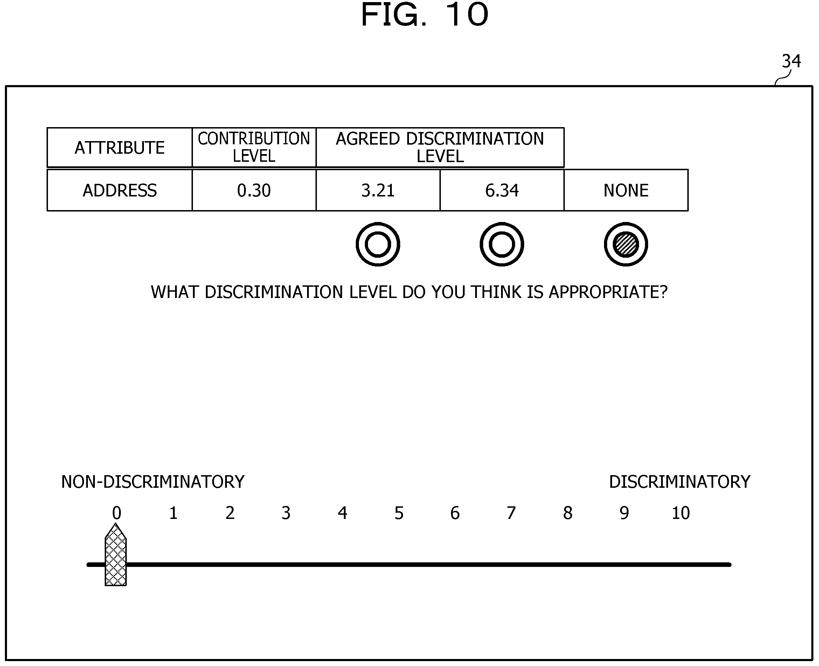

Furthermore, in a case where the second evaluator does not agree with any of the agreed discrimination levels, which is, in a case where "none" is selected on the selection screen 32, the reception unit 14 displays, for example, an additional reception screen 34 as illustrated in FIG. 10 on the display device of the information processing apparatus used by the second evaluator. In the example of FIG. 10, a slide bar for allowing the second evaluator to select a discrimination level for the attribute for which "none" has been selected is displayed on the additional reception screen 34. The reception unit 14 receives the discrimination level from the second evaluator through the additional reception screen 34. The reception unit 14 sets the agreed discrimination level again by combining the discrimination level received from the second evaluator and the discrimination level received from the first evaluator group.

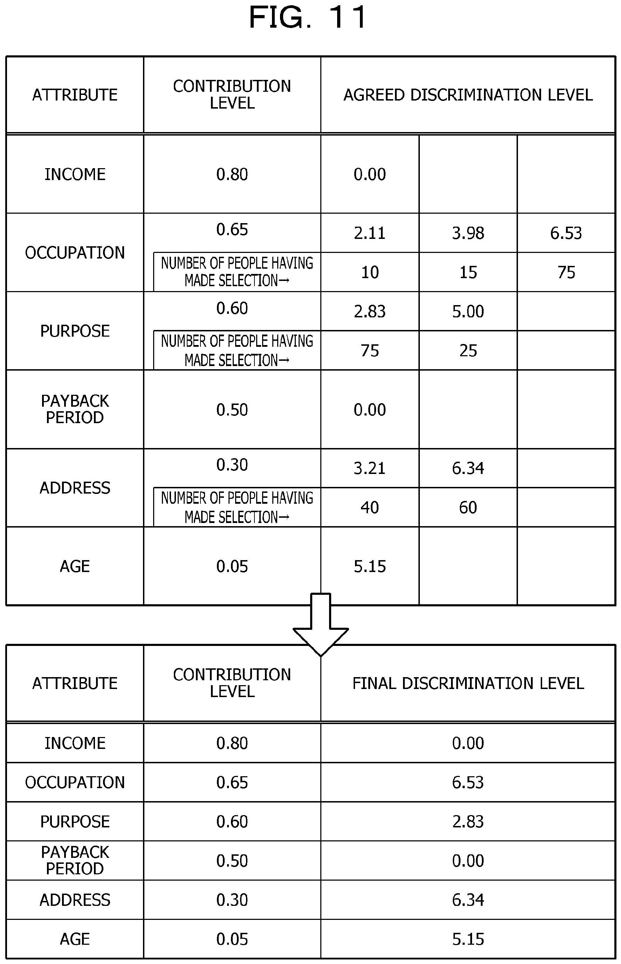

The reception unit 14 aggregates the discrimination levels selected by the second evaluators through the selection screen 32, and for example, accepts the agreed discrimination level selected by the second evaluators most frequently as a final discrimination level. FIG. 11 is a diagram illustrating exemplary aggregate results of the discrimination levels selected by the second evaluators. In the example of FIG. 11, the number of the second evaluators is 100. For example, for the attribute "occupation", the reception unit 14 accepts, of the agreed discrimination levels "2.11", "3.98", and "6.53", "6.53" most frequently selected by the second evaluators as a final discrimination level. The lower part of FIG. 11 illustrates an exemplary final discrimination level for each attribute. In the present embodiment, an attribute with a final discrimination level higher than 0 is specified as an indirect attribute.

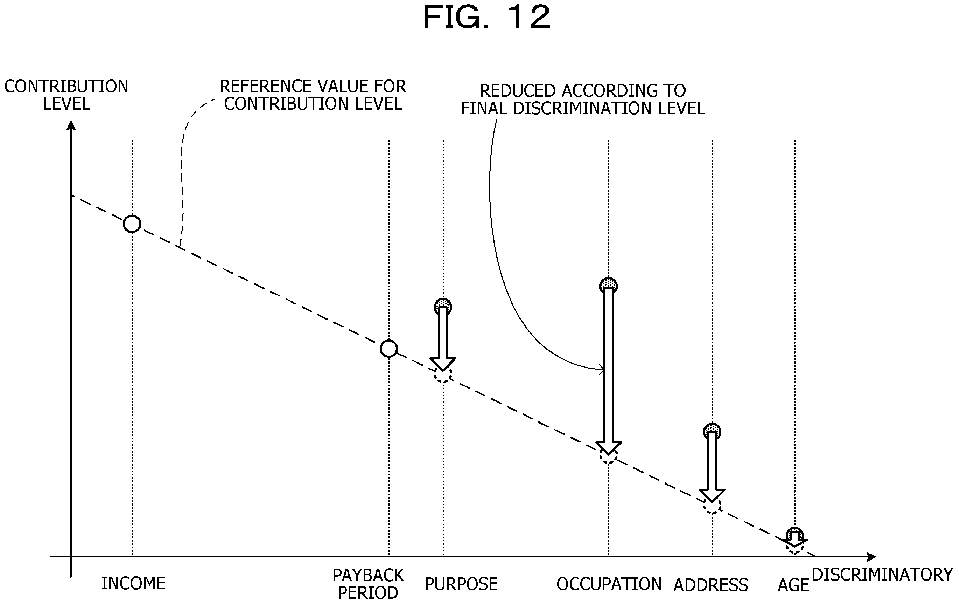

The determination unit 16 determines a reference value for the contribution level of each attribute on the basis of the final discrimination level received by the reception unit 14 and the number of data for each attribute in the data set. Specifically, as illustrated in FIG. 12, the determination unit 16 determines, as the reference value for the contribution level of each attribute, a value obtained by reducing the contribution level calculated by the calculation unit 12 at a rate corresponding to the magnitude of the final discrimination level. As a result, as illustrated in FIG. 12, the reference value for each attribute in consideration of the contribution effect is determined.

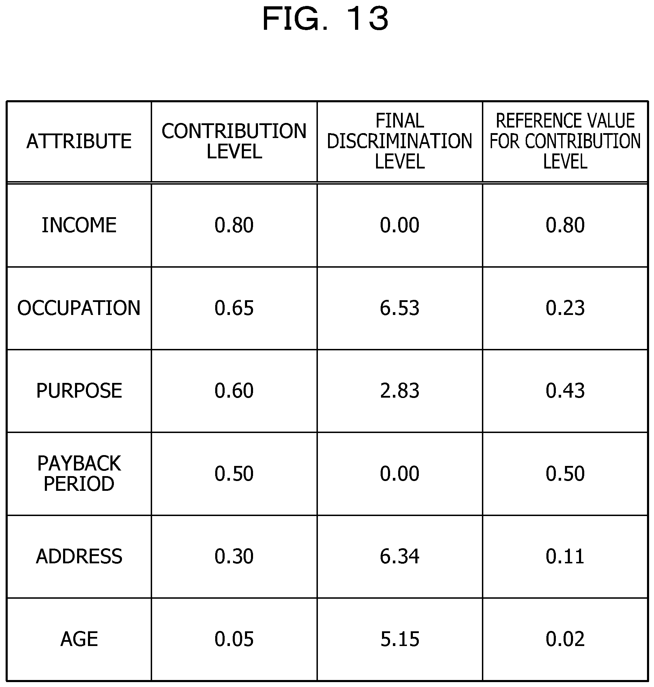

For example, the determination unit 16 determines a value obtained by subtracting a ratio represented by 1/10 of the final discrimination level from the contribution level of each attribute calculated by the calculation unit 12 as a reference value for the contribution level of that attribute. For example, for the attribute "occupation", the contribution level is 0.65 and the final discrimination level is 6.53, and thus the determination unit 16 determines 0.65 - (0.65 × 0.653) = 0.23 as a reference value for the contribution level. FIG. 13 illustrates the reference value for the contribution level of each attribute calculated in the calculation example described above.

The generation unit 18 changes attributes of at least a part of the data contained in the data set according to the reference value for the contribution level of each attribute determined by the determination unit 16, thereby generating training data for machine learning. Specifically, the generation unit 18 changes the attribute value of the attribute "determination result", which is the label, of at least a part of the data contained in the data set in such a manner that a difference between the reference value for the contribution level of each attribute and the contribution level calculated by the calculation unit 12 is equal to or less than a predetermined value. More specifically, the generation unit 18 changes the attribute value of the attribute "determination result" of at least a part of the data contained in the data set to an attribute value representing a determination result different from the attribute value of the original data in such a manner that the contribution level calculated by the calculation unit 12 is lower than the reference value.

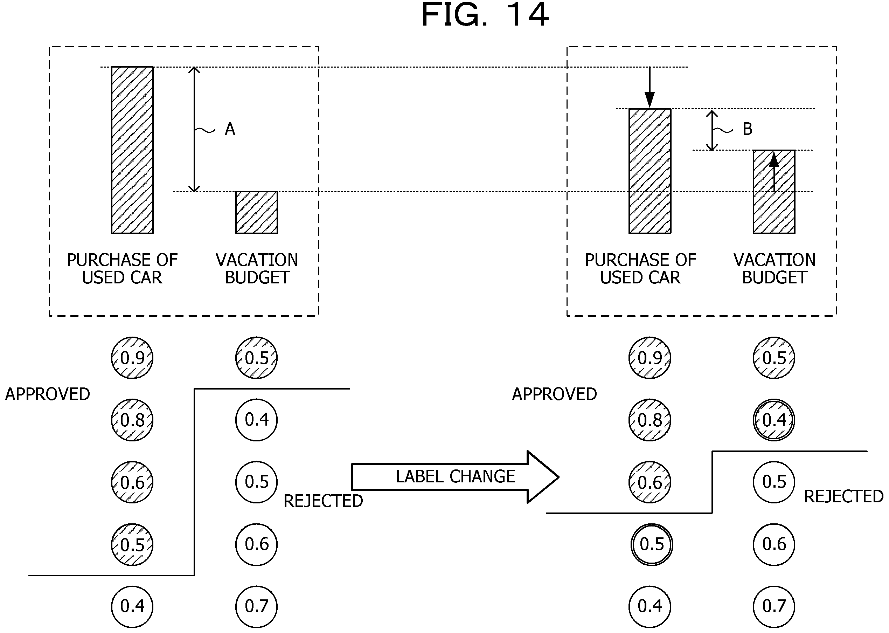

For example, the generation unit 18 changes the attribute of partial data using a technique called massaging. FIG. 14 illustrates a case of changing a label in such a manner that the contribution level of the attribute "purpose" becomes equal to or lower than the reference value. In this case, the generation unit 18 classifies each piece of data contained in the data set with a common classifier such as a random forest, for example, and calculates, for each piece of data, a classification score indicating with what degree of certainty each piece of data is classified into the class indicated by the label of the data. In FIG. 14, a circle with a number written inside corresponds to each piece of data, and the number represents the classification score of each piece of data. Furthermore, a hatched circle indicates that the label of the data is "approval", and a white circle indicates that the label of the data is "rejection". Furthermore, in FIG. 14, a bar chart indicating the number of data in which the attribute value of the attribute "purpose" is the "purchase of a used car" and the label is the "approval" and the number of data in which the attribute value of the attribute "purpose" is the "vacation budget" and the label is the "approval" is illustrated together with the circles representing the individual pieces of data. A difference in the number of data with the same label between the attribute values for a certain attribute (A in FIG. 14) corresponds to the contribution level of that attribute.

The generation unit 18 sorts the data in such a manner that the classification score becomes lower toward the boundary of the label for each attribute value. In other words, the data with the label "approval" closest to the boundary is data with the lowest probability of being classified as "approval", and the data with the label "rejection" closest to the boundary is data with the lowest probability of being classified as "rejection". Here, in the example of FIG. 13, the reference value for the contribution level of the attribute "purpose" is 0.43, which is reduced from the contribution level 0.60 calculated by the calculation unit 12 according to the discrimination level. Therefore, the generation unit 18 changes the label to the other label in such a manner that the contribution level decreases in order from the data closest to the boundary. In other words, with regard to the data with the attribute value "purchase of a used car", the generation unit 18 changes the label of the data with the label "approval" closest to the boundary to the "rejection" (data indicated by a white double circle in FIG. 14). Furthermore, with regard to the data with the attribute value "vacation budget", the generation unit 18 changes the label of the data with the label "rejection" closest to the boundary to the "approval" (data indicated by a hatched double circle in FIG. 14). As a result, the contribution level corresponding to the difference in the number of data with the label "approval" between the attribute values for the attribute "purpose" is lowered, and approaches the reference value determined by the determination unit 16 (B in FIG. 14).

The generation unit 18 repeats the label change as described above until the contribution level becomes equal to or lower than the reference value, and sets the data with the label in the case where the contribution level is equal to or lower than the reference value as training data. The generation unit 18 outputs a training data set including a plurality of pieces of generated training data. Note that the label change is not limited to the case of being carried out by the massaging described above, and the data may be changed on the basis of another criterion such as elift, a reliability level, or the like.

The output training data set is used for model machine learning such as a neural network in a machine learning device 20 as illustrated in FIG. 1. Specifically, the machine learning device 20 carries out machine learning for model parameters in such a manner that a model output when an attribute value of a model used for determination included in the training data is input corresponds to an attribute value of an attribute indicating a determination result, which is a label.

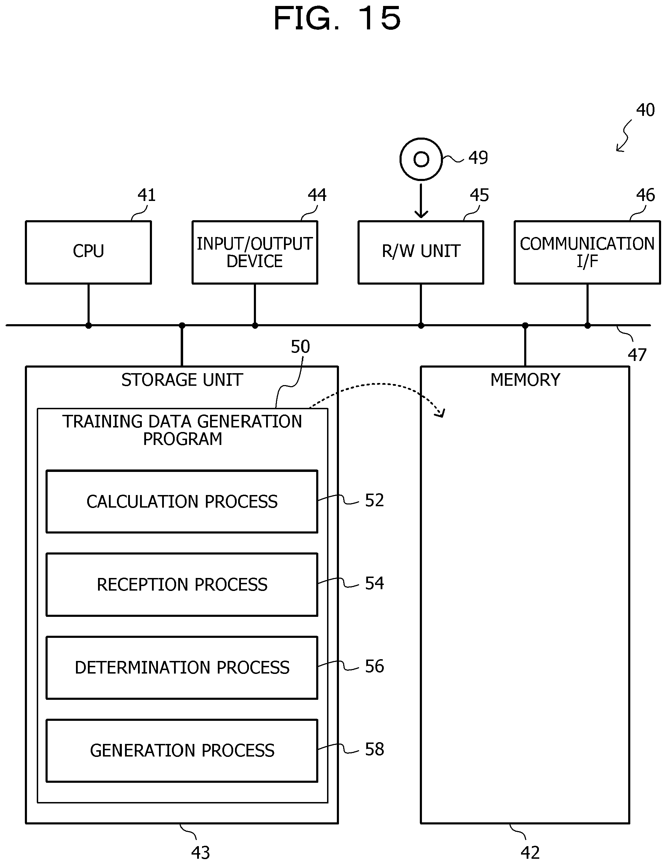

The training data generation device 10 may be implemented by, for example, a computer 40 illustrated in FIG. 15. The computer 40 includes a central processing unit (CPU) 41, a memory 42 as a temporary storage area, and a nonvolatile storage unit 43. Furthermore, the computer 40 includes an input/output device 44 such as an input unit or a display unit, and a read/write (R/W) unit 45 that controls reading and writing of data from/to a storage medium 49. Furthermore, the computer 40 includes a communication interface (I/F) 46 to be connected to a network such as the Internet. The CPU 41, the memory 42, the storage unit 43, the input/output device 44, the R/W unit 45, and the communication I/F 46 are connected to each other via a bus 47.

The storage unit 43 may be implemented by a hard disk drive (HDD), a solid state drive (SSD), a flash memory, or the like. The storage unit 43 as a storage medium stores a training data generation program 50 for causing the computer 40 to function as the training data generation device 10. The training data generation program 50 has a calculation process 52, a reception process 54, a determination process 56, and a generation process 58.

The CPU 41 reads the training data generation program 50 from the storage unit 43 to load it into the memory 42, and sequentially executes the processes included in the training data generation program 50. The CPU 41 executes the calculation process 52, thereby operating as the calculation unit 12 illustrated in FIG. 1. Furthermore, the CPU 41 executes the reception process 54, thereby operating as the reception unit 14 illustrated in FIG. 1. Furthermore, the CPU 41 executes the determination process 56, thereby operating as the determination unit 16 illustrated in FIG. 1. Furthermore, the CPU 41 executes the generation process 58, thereby operating as the generation unit 18 illustrated in FIG. 1. As a result, the computer 40 that has executed the training data generation program 50 functions as the training data generation device 10. Note that the CPU 41 that executes the program is hardware.

Note that the functions implemented by the training data generation program 50 may also be implemented by, for example, a semiconductor integrated circuit, more specifically, by an application specific integrated circuit (ASIC) or the like.

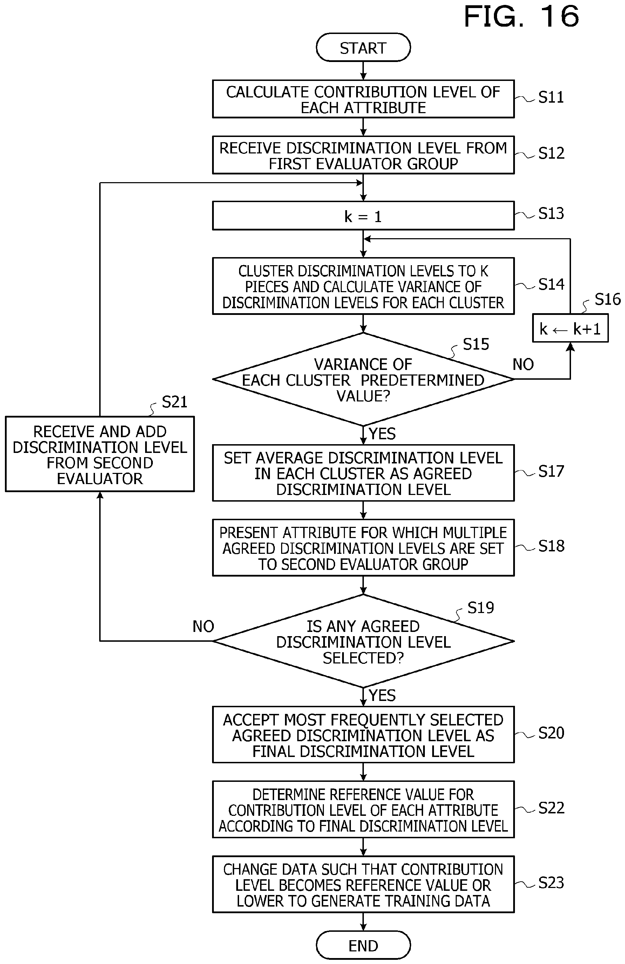

Next, operation of the training data generation device 10 according to the present embodiment will be described. When a data set is input to the training data generation device 10, the training data generation device 10 carries out a training data generation process illustrated in FIG. 16. Note that the training data generation process is an exemplary method of generating training data according to the disclosed technique.

In step S11, the calculation unit 12 obtains the data set input to the training data generation device 10, and calculates a contribution level of each attribute. Next, in step S12, the reception unit 14 displays, for example, the reception screen 30 as illustrated in FIG. 4 on the display device of the information processing apparatus used by each of the plurality of first evaluators included in the first evaluator group. Then, the reception unit 14 receives the discrimination level for each attribute from each of the plurality of first evaluators.

Next, in step S13, the reception unit 14 sets 1 to a variable k indicating the number of clusters in clustering processing executed in step S14 to be described later. Next, in step S14, the reception unit 14 clusters, for each attribute, the discrimination levels received in step S12 described above to k pieces. Then, the reception unit 14 calculates variance of the discrimination levels for each cluster. Note that, when k = 1, the reception unit 14 omits the clustering processing in the present step, and calculates the variance of the discrimination levels with the discrimination levels received in step S12 described above as one cluster.

Next, in step S15, the reception unit 14 determines, for each attribute, whether or not the variance of the discrimination levels included in each cluster is equal to or less than a predetermined value. If the variance of all of the clusters is equal to or less than the predetermined value, the process proceeds to step S17. On the other hand, if the variance of any of the clusters exceeds the predetermined value, the process proceeds to step S16 so that the reception unit 14 increments k by 1, and the process returns to step S14. In step S17, the reception unit 14 sets, for each attribute, each of the averages of the discrimination levels included in the individual clusters as an agreed discrimination level for that attribute.

Next, in step S18, the reception unit 14 displays, for example, the selection screen 32 as illustrated in FIG. 9 on the display device of the information processing apparatus used by each of the second evaluators for the attributes for which multiple agreed discrimination levels are set. As a result, the reception unit 14 presents, to each of the second evaluators, each of the agreed discrimination levels as an option for the attributes for which multiple agreed discrimination levels are set.

Next, in step S19, the reception unit 14 determines whether or not any of the agreed discrimination levels is selected by the second evaluators. If any of the agreed discrimination levels is selected, the process proceeds to step S20, and the reception unit 14 aggregates the discrimination levels selected by the second evaluators through the selection screen 32, and accepts the agreed discrimination level most frequently selected by the second evaluators as a final discrimination level. On the other hand, if no agreed discrimination level is selected, which is, if "none" is selected on the selection screen 32, the process proceeds to step S21. In step S21, the reception unit 14 displays, for example, the additional reception screen 34 as illustrated in FIG. 10 on the display device of the information processing apparatus used by the second evaluator who has selected "none". Then, the reception unit 14 receives the discrimination level from the second evaluators through the additional reception screen 34, and adds the discrimination level received from the second evaluators to the discrimination level received from the first evaluator group, and the process proceeds to step S13.

Next, in step S22, the determination unit 16 determines, as a reference value for the contribution level of each attribute, a value obtained by reducing the contribution level calculated in step S11 described above at a rate corresponding to the magnitude of the final discrimination level accepted in step S20 described above. Next, in step S23, the generation unit 18 changes the attribute value (label) of the attribute "determination result" of at least a part of the data contained in the data set to an attribute value representing a determination result different from the attribute value of the original data in such a manner that the contribution level is lower than the reference value for each attribute. As a result, the generation unit 18 generates training data and outputs a plurality of pieces of the generated training data as a training data set, and the training data generation process is terminated.

Then, the machine learning device 20 carries out model machine learning such as a neural network using the training data set output from the training data generation device 10.

As described above, the training data generation device according to the present embodiment accepts the evaluation value for the value calculated on the basis of the number of data for each attribute contained in a plurality of data, and determines the reference value for each attribute on the basis of the accepted evaluation value and the number of data for each attribute. Then, the training data generation device changes the attribute of at least partial data of the plurality of data according to the reference value for each attribute, thereby generating training data for machine learning. This makes it possible to generate training data for carrying out machine learning of a model in which a bias toward discriminatory determination based on a discriminatory attribute in consideration of context is appropriately reduced.

Furthermore, the training data generation device according to the present embodiment is capable of prompting early agreement even with regard to an attribute on which evaluations by the evaluators vary by, in the process of accepting the final discrimination level, setting multiple agreed discrimination levels for the same attribute to accept various discrimination levels for the same attribute. For example, in a case where the computer presents the average of the discrimination levels evaluated by the first evaluator group to the second evaluator group as a single agreed discrimination level, the number of the second evaluators who are satisfied with the presented agreed discrimination level may decrease, which may hinder the early agreement. Meanwhile, the training data generation device according to the present embodiment presents multiple agreed discrimination levels, whereby the number of the second evaluators who are satisfied with the presented discrimination level increases, which may prompt the early agreement.

Furthermore, the training data generation device according to the present embodiment presents, to the second evaluators, multiple agreed discrimination levels as options for the attribute for which the multiple agreed discrimination levels are set. In other words, even in a case where the number of attributes is enormous, the second evaluators only need to select a discrimination level from the options for partial attributes among the multiple attributes. Accordingly, it becomes possible to suppress entering into the deliberation process of the second evaluators, or to allow the second evaluators entered into the deliberation process to exit the deliberation process at an early stage. As a result, a plurality of evaluators may quickly agree on the discrimination level for each attribute as compared with the case where each of all the evaluators evaluates the discrimination level for all attributes.

Note that, while the mode in which the training data generation program is stored (installed) in the storage unit in advance has been described in the embodiment above, it is not limited to this. The program according to the disclosed technique may be provided in a form stored in a storage medium such as a compact disc read only memory (CD-ROM), a digital versatile disc read only memory (DVD-ROM), or a universal serial bus (USB) memory.

### CITATION LIST

### NON-PATENT DOCUMENT

Non-Patent Document 1: Dino Pedreschi, Salvatore Ruggieri, Franco Turini, "Discrimination-aware Data Mining", KDD '08: Proceedings of the 14th ACM SIGKDD international conference on Knowledge discovery and data mining, August 2008, Pages 560-568

### REFERENCE SIGNS LIST

10Training data generation device
12Calculation unit
14Reception unit
16Determination unit
18Generation unit
20Machine learning device
30Reception screen
32Selection screen
34Additional reception screen
40Computer
41CPU
42Memory
43Storage unit
49Storage medium
50Training data generation program

## Claims

1. A training data generation program for causing a computer to perform processing comprising:
receiving an evaluation value for a value calculated on a basis of a number of data for each attribute included in a plurality of data;
determining a reference value for each attribute on a basis of the received evaluation value and the number of data for each attribute; and
generating training data for machine learning by changing the attribute of at least partial data of the plurality of data according to the reference value for each attribute.

2. The training data generation program according to claim 1, the processing further comprising:
receiving a plurality of the evaluation values from a respective plurality of evaluators; and
in a case where a degree of dispersion of the received evaluation values is equal to or lower than a predetermined value, aggregating the evaluation values received from the respective plurality of evaluators and accept the aggregated evaluation value as an evaluation value agreed by the plurality of evaluators.

3. The training data generation program according to claim 2, the processing further comprising:
in a case where the degree of dispersion exceeds the predetermined value,
clustering the evaluation values received from the respective plurality of evaluators until the degree of dispersion of the individual evaluation values becomes equal to or lower than the predetermined value,
aggregating the evaluation values included in each cluster, and
accepting the aggregated evaluation value as each of a plurality of the agreed evaluation values.

4. The training data generation program according to claim 3, the processing further comprising:
presenting each of the agreed evaluation values as an option for the attribute for which the plurality of agreed evaluation values exists to accept a final evaluation value.

5. The training data generation program according to any one of claims 1 to 4, the processing further comprising:
determining a value obtained by lowering the value calculated on the basis of the number of data for each attribute at a rate that corresponds to magnitude of the evaluation value as the reference value for each attribute.

6. The training data generation program according to any one of claims 1 to 5, the processing further comprising:
changing the attribute of at least partial data of the plurality of data such that a difference between the reference value for each attribute and the value is equal to or less than a predetermined value.

7. The training data generation program according to any one of claims 1 to 6, wherein
the attribute includes an attribute used for determination and an attribute that represents a determination result, and a contribution level of the attribute used for the determination to the determination result is calculated as the value.

8. The training data generation program according to claim 7, the processing further comprising:
changing an attribute value of the attribute that represents the determination result to an attribute value that represents a different determination result for at least partial data of the plurality of data such that the contribution level becomes equal to or lower than the reference value for each attribute.

9. The training data generation program according to claim 7 or 8, the processing further comprising:
accepting, as the evaluation value, a discrimination level that represents a degree of discriminatory contribution of the attribute used for the determination to the determination result.

10. A training data generation device comprising:
a control unit configured to:
receive an evaluation value for a value calculated on a basis of a number of data for each attribute included in a plurality of data;
determine a reference value for each attribute on a basis of the received evaluation value and the number of data for each attribute; and
generate training data for machine learning by changing the attribute of at least partial data of the plurality of data according to the reference value for each attribute.

11. The training data generation device according to claim 10, wherein
the control unit is configured to:
receive a plurality of the evaluation values from a respective plurality of evaluators; and
in a case where a degree of dispersion of the received evaluation values is equal to or lower than a predetermined value, aggregate the evaluation values received from the respective plurality of evaluators and accept the aggregated evaluation value as an evaluation value agreed by the plurality of evaluators.

12. The training data generation device according to claim 11, wherein
the control unit is configured to:
in a case where the degree of dispersion exceeds the predetermined value, cluster the evaluation values received from the respective plurality of evaluators until the degree of dispersion of the individual evaluation values becomes equal to or lower than the predetermined value, aggregate the evaluation values included in each cluster, and accept the aggregated evaluation value as each of a plurality of the agreed evaluation values.

13. The training data generation device according to claim 12, wherein
the control unit is configured to:
present each of the agreed evaluation values as an option for the attribute for which the plurality of agreed evaluation values exists to accept a final evaluation value.

14. The training data generation device according to any one of claims 10 to 13, wherein
the control unit is configured to:
determine a value obtained by lowering the value calculated on the basis of the number of data for each attribute at a rate that corresponds to magnitude of the evaluation value as the reference value for each attribute.

15. The training data generation device according to any one of claims 10 to 14, wherein
the control unit is configured to:
change the attribute of at least partial data of the plurality of data such that a difference between the reference value for each attribute and the value is equal to or less than a predetermined value.

16. The training data generation device according to any one of claims 10 to 15, wherein
the attribute includes an attribute used for determination and an attribute that represents a determination result, and a contribution level of the attribute used for the determination to the determination result is calculated as the value.

17. The training data generation device according to claim 16, wherein
the control unit is configured to:
change an attribute value of the attribute that represents the determination result to an attribute value that represents a different determination result for at least partial data of the plurality of data such that the contribution level becomes equal to or lower than the reference value for each attribute.

18. The training data generation device according to claim 16 or 17, wherein
the control unit is configured to:
accept, as the evaluation value, a discrimination level that represents a degree of discriminatory contribution of the attribute used for the determination to the determination result.

19. A training data generation method implemented by a computer, the method comprising:
receiving an evaluation value for a value calculated on a basis of a number of data for each attribute included in a plurality of data;
determining a reference value for each attribute on a basis of the received evaluation value and the number of data for each attribute; and
generating training data for machine learning by changing the attribute of at least partial data of the plurality of data according to the reference value for each attribute.

20. A non-transitory computer-readable storage medium storing a training data generation program for causing a computer to perform processing comprising:
receiving an evaluation value for a value calculated on a basis of a number of data for each attribute included in a plurality of data;
determining a reference value for each attribute on a basis of the received evaluation value and the number of data for each attribute; and
generating training data for machine learning by changing the attribute of at least partial data of the plurality of data according to the reference value for each attribute.
